## Europäisches Patentamt
## European Patent Office
## Office européen des brevets

(19)

(11) Veröffentlichungsnummer: **0 151 234**
A2

(12) # EUROPÄISCHE PATENTANMELDUNG

(21) Anmeldenummer: 84113258.2

(22) Anmeldetag: 03.11.84

(51) Int. Cl.⁴: **B 01 D 53/34**
B 01 D 53/08, B 01 D 46/32
C 02 F 1/40

(30) Priorität: 10.11.83 DE 3340655
23.08.84 DE 3430968

(43) Veröffentlichungstag der Anmeldung:
14.08.85 Patentblatt 85/33

(84) Benannte Vertragsstaaten:
AT BE CH FR GB IT LI LU NL SE

(71) Anmelder: Energie Systemplanung INSUMMA GmbH
Bärenschanzstrasse 8 D
D-8500 Nürnberg(DE)

(72) Erfinder: Koch, Christian, Dr. Ing.
Würzburger Ring 33
D-8520 Erlangen(DE)

(72) Erfinder: Erdlen, Erwin
Vorjurastrasse 139
D-8500 Nürnberg(DE)

(74) Vertreter: Patentanwälte Czowalla . Matschkur +
Partner
Dr.-Kurt-Schumacher-Strasse 23 Postfach 9109
D-8500 Nürnberg 11(DE)

(54) **Filtervorrichtung zur Abgas- oder Wasserfilterung.**

(57) Filtervorrichtung zur Abgasfilterung, insbesondere um Rauchgas von Arsen, Blei, Fluor, Gichtgas oder Schwefeloxiden zu befreien, mit einem mit (vorzugsweise porösen) Filterkugeln gefüllten Filterbehälter mit einer Einlaßöffnugn für das zu reinigende fluide Medium am einen Behälterende und einer Auslaßöffnung am anderen Behälterende einer Transporteinrichtung zur Entnahme von Filterkugeln am einen Behälterende und zur Wiederzuführung am anderen Behälterende, sowie einer im Zuge der Transporteinrichtung angeordneten Waschvorrichtung zur Reinigung der Filterkugeln, wobei im Bereich des Wiederzuführendes des Behälters eine Dosiervorrichtung zur Zugabe von einen Überzug auf den Filterkugeln bildenden Reaktionssubstanzen für schädliche Abgaskomponenten gelagert ist.

EP 0 151 234 A2

./...

FIG. 2

Filtervorrichtung zur Abgas- oder Wasserfilterung

Die Erfindung bezieht sich auf eine Filtervorrichtung zur Abgasfilterung, insbesondere um Rauchgas von Arsen, Blei, Fluor, Gichtgas oder Schwefeloxiden zu befreien, mit einem mit (vorzugsweise porösen) Filterkugeln gefüllten Filterbehälter mit einer Einlaßöffnung für das zu reinigende fluide Medium am einen Behälterende und einer Auslaßöffnung am anderen Behälterende einer Transporteinrichtung zur Entnahme von Filterkugeln am einen Behälterende und zur Wiederzuführung am anderen Behälterende, sowie einer im Zuge der Transporteinrichtung angeordneten Waschvorrichtung zur Reinigung der Filterkugeln.

Die Funktionsweise derartiger Filtervorrichtungen beruht darauf, daß die Verunreinigungen sich entweder auf der Oberfläche der Kugeln oder - bei porösen Filterkugeln in den Poren - durch Adsorption ablagern. In der Waschvorrichtung werden diese abgelagerten Verunreinigungen wieder entfernt, so daß die Kugeln erneut dem Kreislauf zugeführt werden, um Verunreinigungen aus dem Abgas- oder Flüssigkeitsstrom herauszufiltern.

- 2 -

Dieses Verfahren eignet sich ersichtlich nur für wenige Verunreinigungen, insbesondere Staub, während ein Großteil von gasförmigen Verunreinigungen, wie beispielsweise Schwefeloxide, oder ähnliche im Zuge von Verbrennungsanlagen auftretenden Verunreinigungen, auf diese Art und Weise nur außerordentlich unvollständig erfaßt werden können.

Der Erfindung liegt daher die Aufgabe zugrunde, eine Filtervorrichtung der eingangs genannten Art so auszugestalten, daß ein quantitatives Herausfiltern der unerwünschten Verunreinigungen, noch dazu in selektiver Anpassung an die jeweils auftretenden Schadstoffe, möglich ist.

Zur Lösung dieser Aufgabe ist erfindungsgemäß vorgesehen, daß im Bereich des Wiederzuführendes des Behälters eine Dosiervorrichtung zur Zugabe von einen Überzug auf den Filterkugeln bildenden Reaktionssubstanzen für schädliche Abgaskomponenten angeordnet ist.

Eine derartige Dosiervorrichtung kann gemäß einer ersten Ausführungsform der Erfindung durch einen über- oder unterhalb der Oberfläche des Filterkugelbettes als rotierend gelagerter Rührarm angeordneter Dosierarm ausgebildet sein, wobei ggf. auch zwei beabstandete derartige Rührarme vorgesehen sein können, die jeweils der Zugabe unterschiedlicher Reaktionssubstanzen dienen.

Das Zugeben einer solchen Reaktionssubstanz, beispielsweise von Kalkmilch, Kalksteinmilch, Dolomit-Wassergemisch oder auch nur Wasser bzw. Ammoniakwasser bei der Reduktion von Stickoxiden, ergibt eine verbesserte Ausfilterung von Schwefeldioxyd, von Chlor- und Fluorionen. Die besondere Anordnung des Dosierarms als unter Oberfläche der Filterkugeln, ca. etwa 10 % unter der Kugeloberfläche - gerechnet auf die Gesamthöhe der Kugelpackung - ergibt nicht nur den Vor-

- 3 -

teil, daß die flüssigen Reaktionssubstanzen nicht an der häufig sehr heißen Oberfläche der Kugeln sofort verdampfen und damit ihre Wirkung gar nicht oder nur einem Bruchteil erfüllen können, sondern darüber hinaus auch der Vorzug, daß ein gleichmäßiges Umrühren der gereinigten Kugeln im oberen Bereich der Kugelpackung stattfindet. Dadurch wird sichergestellt, daß über den gesamten Querschnitt des vorzugsweise als stehender Zylinder ausgebildeten Filterbehälters von oben her jeweils frische gereinigte Filterkugeln wieder zugeführt werden, so daß auch über den gesamten Querschnitt eine gleichmäßige Reinigung des von unten nach oben im Gegenstrom durchströmenden Abgases erreicht werden kann.

Bei besonders stark mit Schadstoffen verunreinigten Abgasen, insbesondere in Fällen, in denen viele unterschiedliche Schadstoffe im Abgas enthalten sind, kann es gemäß einer Weiterbildung der Erfindung vorteilhaft sein, eine dem Rührarm nachgeschaltete, d.h. bei stehendem Filterbehälter weiter unten angeordnete zweite Zugabeeinrichtung vorzusehen, die gegebenenfalls als zweiter Rührarm ausgebildet sein kann.

Als ganz besonders vorteilhaft hat es sich dabei herausgestellt, wenn am Behälterende, an dem die gereinigten Filterkugeln wieder zugeführt werden, eine Zugabevorrichtung für verbrennungsaktive Katalysatorkugeln und/oder für stückigen Kalkstein oder Dolomit in das Kugelbett vorgesehen ist.

Der in Kugelform oder Naturbruchform zugeführte Kalkstein oder Dolomit, der beispielsweise zu 10 % neben den üblichen Filterkugeln in der Kugelbettmischung vorhanden sein kann, rutscht mit den Filterkugeln nach unten.

Die durch die Reaktion mit SO2 an der Oberfläche gebildete Schicht wird am unteren Ende, an dem die Mischung aus Filterkugeln und den Kalkstein oder Dolomitstücken über die Transporteinrichtung entnommen wird, bzw. an einer nachgeschalteten Stelle im Rahmen der Transporteinrichtung abgewaschen, so daß nach der Wiederzuführung eine frische Kalksteinoberfläche zur erneuten Reaktion mit den herauszufilternden Verunreinigungen zur Verfügung steht.

Eine weitere bevorzugte Reaktionssubstanz ist Calziumchlorid oder Magnesiumchlorid zur Verbesserung der Feinstaubabscheidung. Diese Substanzen sind hygroskopisch und binden den Staub in einer klebrigen Oberflächenschicht und nach der Trocknung in Form einer Salzkruste, die im Zuge der Reinigung der Filterkugelpackung ebenfalls wieder problemlos entfernt werden kann.

Durch die erfindungsgemäße Zugabe von Reaktionssubstanzen lassen sich auch andere Materialien als Keramik für die Filterkugeln verwenden, beispielsweise die sehr viel billigeren Blähtonkugeln oder ähnlich poröse adsorbtionsfähige Werkstoffe. Die Füllung des Filterbehälters besteht dann beispielsweise bei der Entstaubung aus Blähtonkugeln mit Kalzium- oder Magnesiumchloridoberfläche und bei der Reinigung von gasförmigen Komponenten aus einer Mischung von 90 % Blähtonkügelchen und ca. 10 % Kalkstein- oder Dolomitteilchen (Schotter 8 - 30 mm), wobei über einen Rührarm noch zusätzliche Reaktionssubstanzen zugeführt werden können, wie sie bereits weiter oben angesprochen worden sind.

Die Reinigung der Abgase von Stickoxiden ist bevorzugt bei einer Ausgestaltung der Filtervorrichtung mit zwei übereinander angeordneten Rührarmen möglich. In diesem Fall wird in der unteren Rührarmebene beispielsweise ammoniakhaltiges Wasser eingespeist, während der darüber liegende Rührarm eine Chrom-, Molubdän, oder Kupferlösung oder eine Mischung aus diesen Substanzen in die Filterkugeln verteilt. Diese Lösungen sind katalytisch und wirken sehr aktiv bei der Beseitung der Stickoxide.

Bei der Reinigung von Abgasen von brennbaren Dämpfen können entweder unter die Kugeln verbrennungsaktive Katalysatoren eingemischt werden, die dann die brennbaren Dämpfe gleich verbrennen, oder aber die Kugeln müssen stattdessen am unteren Ende gewaschen werden und in eine über dem Gerät liegende Verbrennungskammer gebracht werden, wo sie dann mit Verbrennungsgasen höherer Temperatur wieder regeneriert bzw. nachgebrannt werden.

Für eine Reihe von Anwendungsfällen hat es sich allerdings gezeigt, daß bei der Verteilung der Reaktionssubstanz mit Hilfe eines Rührarms im Bereich der Oberfläche der Filterkugelpackung Schwierigkeiten mit einer gleichmäßigen Beschichtung aller Filterkugeln über den gesamten Querschnitt des Filterbehälters entstehen. Durch die dichte Packung der Filterkugeln ergibt sich kein Sprühkegel mehr, der sicherstellt, daß auch wirklich alle Kugeln rundum mit einer Überzugsschicht versehen werden können. Dies führt aber wiederum dazu, daß an einzelnen Stellen das Rauchgas dann quasi an Filterkugeln vorbeiströmt, die unbeschichtet sind und somit ihre Wirkung bei der Abgasentgiftung gar nicht entfalten können. Auch besteht bei sehr flüssigen, wenig klebrigen Reaktionssubstanzen die Gefahr, daß die Reaktionssubstanz vom Abgasstrom mitgerissen wird, noch ehe sie überhaupt auf die Filterkugeln gelangt ist, um sich auf deren Oberfläche als Überzugsschicht abzusetzen. Dies würde aber dann bedeuten, daß die an sich ja gereinigten Gase nunmehr künstlich durch die Reaktionssubstanz verunreinigt sind und nochmals gereinigt werden müssen.

Um diese Schwierigkeiten zu beseitigen, ist in Weiterbildung der Erfindung vorgesehen, daß die Dosiervorrichtung außerhalb des Filterbehälters angeordnet und so ausgebildet ist, daß die Filterkugeln beim Eintreten in den Filterbehälter mit einer definierten Überzugsschicht versehen sind derart, daß das strömende Rauchgas keine überschüssige Reaktionssubstand mitreißen kann.

Die Erfindung geht dabei von der Erkenntnis aus, daß es für die Wirksamkeit der Reaktionsmittelschicht auf den Kugeln nicht nur wichtig ist, daß sie eine gewisse Mindestdicke aufweist, sondern daß es genauso wichtig ist, daß sie eine bestimmte Höchstdicke nicht übersteigt, da ansonsten die Belastung des Rauchgases durch die vom Rauchgas mitgerissenen Reaktionssubstanzen den gewünschten Reinigungseffekt teilweise wieder aufhebt oder gar ins Gegenteil verkehrt.

In Weiterbildung der Erfindung kann dabei vorgesehen sein, daß die Dosiervorrichtung eine über einer, teilweise als Gitter ausgebildeten Schräglaufbahn für die Filterkugeln angeordnete Sprühvorrichtung für die Reaktionssubstanzen aufweist. Die gereinigten Filterkugeln laufen auf die Schräglaufbahn auf, werden während des Herunterrollens mit der Reaktionssubstanz besprüht, wobei durch das Rollen einerseits und die Gitterausbildung andererseits, sichergestellt ist, daß sowohl die gesamte Oberfläche jeder Kugel mit Reaktions-

substanz überzogen wird, als auch daß die Überzugsschicht nicht zu dick wird, sondern überschüssiges Material abläuft und dann zum Reaktionssubstanzvorratstank zurückgeführt werden kann. Durch Anordnen einer mehr oder minder langen Trockenstrecke.- je nachdem welcher Art von Reaktionssubstanz verwendet wird - läßt sich erreichen, daß die Überzugsschicht sich auch noch zusätzlich verfestigt hat, ehe die Filterkugeln in den Filterbehälter einlaufen.

Besonders einfach gestaltet sich der Aufbau einer solchen Anordnung, wenn, wie es in einem weiteren Merkmal der vorliegenden Erfindung vorgesehen ist, die Dosiervorrichtung oberhalb des Filterbehälters angeordnet ist, so daß die gereinigten und neubeschichteten Filterkugeln von oben in den vorzugsweise von oben nach unten durchströmten Filterbehälter einrutschen können und daß am unteren Ende des Filterbehälters ein einen Innenboden bildender gasdurchlässiger Sammeltrichter über einer Austragsvorrichtung für die Filterkugeln vorgesehen.

Das einfach Einrutschen der Filterkugeln aus der Dosiervorrichtung erspart das Vorsehen einer gesonderten Fördervorrichtung und ermöglicht eine besonders schonende Einstellung der Beschichtungsdicke bzw. einfache Trocknung der Überzugsschicht. Eine solche Trocknung, oder zumindest Teiltrocknung ist z.B. zweckmäßig, wenn eine Kalklösung zur Entschwefelung auf die Filterkugeln aufgebracht werden.

Das Durchströmen des Filterbehälters vom Rauchgas im gleichen Durchlaufsinn wie das nach unten Absetzen der Filterkugeln hat den Vorteil, daß die Gefahr eines Mitreißens von Reaktionssubstanzen durch das Rauchgas noch weiter verringert wird. Würde nämlich das Rauchgas im Gegenstrom durchgeführt werden, wie es im Prinzip ebenfalls möglich ist, so besteht dort eine erhöhte Gefahr, daß es - selbst bei der erfindungsgemäßen Vordosierung der Oberzugsschicht - doch noch Reaktionssubstanz mitreißt, insbesondere da es ja auf die beschichteten Filterkugeln mit hoher Temperatur auftriff und dies in einem Stadium, in dem die Beschichtung noch am frischesten ist und damit am leichtesten heruntergerissen werden kann. Dabei ist selbst bei dieser gleichsinnigen Durchsetzung des Filterbehälters durch die Filterkugeln und das Rauchgas die erfindungsgemäße Vordosierung und Einstellung der Beschichtung der Kugeln von sehr großer Bedeutung, da überschüssige Reaktionssubstanz auch bei dieser gleichsinnigen Führung vom gereinigten Rauchgas noch mitgerissen werden könnte, und darüber hinaus die Gefahr eines Verklebens und Zusetzens der Filterkugelpackung und damit einer Verstopfung und Behinderung des Durchströmens von Rauchgas gegeben wäre.

Der Austragsvorrichtung kann eine, eine Filterkugel-Förderschnecke enthaltene Waschovorrichtung nachgeschaltet sein, die als im wesentlichen waagerechtes, ggf. in Förderrichtung etwas ansteigendes Rohr ausgebildet sein kann und von der Waschflüssigkeit anschließend einer Wiederaufbereitungsanlage zugeführt wird.

Dabei hat es sich als zweckmäßig erwiesen, der Waschvorrichtung für die Filterkugeln einen Zwischenspeicher für die gereinigten Filterkugeln nachzuordnen, um auszuschließen, daß durch irgendwelche Staus und Störungen an einer Stelle der Filtervorrichtung ein völliges Stocken des Filterkugelnachschubs eintritt oder aber ein Stau auftritt der die gesamte Anlage stillegt oder gar beschädigt.

Je nach den speziellen Verunreinigungssubstanzen wird man unterschiedliche Reaktionssubstanzen für die Filterkuglen vorsehen, wobei ggf. mehrere Stationen solcher Filtervorrichtungen mit unterschiedlichen Reaktionssubstanzen in jeder Station vorgesehen werden können, um aufeinanderfolgend die einzelnen Schadstoffe herauszufiltern. Im Falle der besonders wesentlichen Entschwefelung von Rauchgas ist eine erfindungsgemäße Vorrichtung in weiterer Ausgestaltung der Erfindung gekennzeichnet durch eine mit einem Kalk- oder Kalksteinsilo verbundene Mischvorrichtung zur Erzeugung einer wässrigen, über eine Dosiervorrichtung der Sprühvorrichtung zuzuführenden Lösung, einer als Trockenstrecke wirkenden Verlängerung der Schräglaufbahn im Zuge der Sprühvorrichtung, sowie einen im Zuge der Wiederaufbereitungsanlage angeordneten Lamellenklärer zur Trennung der Waschflüssigkeit von den, insbesondere Gips enthaltenden, festen Verunreinigungen.

Der Gips wird ausgetragen, während die gereinigte Waschflüssigkeit ggf. nach Zugabe von zusätzlichem Reinwasser sowie von Lauge wieder in die Waschvorrichtung zurückgeführt wird. Im Lamellenklärer wird dabei die Waschflüssigkeit mit einem Flockungsmittel versetzt, um die Abtrennung der Verunreinigung, im speziell genannten Fall der Entschwefelung also insbesondere des Gipses, zu erreichen.

Eine erfindungsgemäße Filtriervorrichtung mit jeweils kontinuierlich umlaufenden und wieder gereinigten Filterkugeln eignet sich aber auch sehr gut zur Reinigung von Flüssigkeiten, insbesondere von ölverschmutztem Wasser. In diesem Fall hat es sich als besonders zweckmäßig erwiesen, die adsorbtionsaktiven Filterkugeln, die in ihren Oberflächenschichten das Öl adsorbieren, in über dem Filterbehälter angeordnete Reinigungsbehälter zu transportieren, aus denen sie - nachdem das Öl entfernt worden ist - über Dosiereinrichtungen in den Filterbehälter zurückfallen.

In den Reinigungsbehältern kann dabei eine Pyrolyse oder Verbrennung der absorbierten Schadstoffe erfolgen, bei der Reinigung von müllverschmutztem Meerwasser beispielsweise in der Weise, daß unmittelbar über dem Filterbehälter ein zunächst von der Transportvorrichtung durchsetzter Verbrennungsbehälter und darüber ein Pyrolysebehälter angeordnet ist, in den die mit Öl getränkten Filterkugeln zunächst einfallen. Bei der pyrolytischen Zersetzung des Öls entsteht Benzin und Leichtöl, die über eine Abscheidevorrichtung vom Pyrolysegas getrennt werden, während auf den Filterkugeln eine Koksschicht gebildet wird. Das Pyrolysegas wird teilweise zurückgeleitet, um über ein Brennwertgerät verbrannt und damit zur Aufrechterhaltung der Pyrolyse eingesetzt zu werden. Die mit einer Koksschicht versehenen Filterkugeln fallen über Dosierklappen od.dgl. in den darunterliegenden Reinigungsbehälter, wo die Koksschicht verbrannt wird, so daß am unteren Ende dann vollständig gereinigte Filterkugeln - wiederum über entsprechende Dosiervorrichtungen - in den eigentlichen vom Meerwasser von unten nach oben durchströmten Filterbehälter zurückgelangen.

Die Reinigung der Filterkugeln in einer über dem eigentlichen Filterbehälter angeordneten Reinigungsbehälter ist nicht nur bei der vorstehend angesprochenen Meerwasserreinigung von ölverschmutztem Wasser, beispielsweise Meerwasser, zweckmässig, sondern auch in vielen Fällen bei der Reinigung von Rauch- oder anderen Abgaben zweckmäßig, in denen ein einfaches Auswaschen der Schadstoffe am unteren Ende des Filterbehälters vor dem Einlauf in die Rückführ-Transportvorrichtung nicht ohne weiteres möglich ist.

Weitere Vorteile, Merkmale und Einzelheiten der Erfindung ergeben sich aus der nachfolgenden Beschreibung einiger Ausführungsbeispiele sowie anhand der Zeichnung. Dabei zeigen:

Fig. 1 einen schematischen Schnitt durch eine Abgasfiltervorrichtung mit Rührarmdosierung,

Fig. 2 eine schematische Darstellung des Aufbaus einer Anlage mit externer Aufbereitung der Filterkugeln einschließlich ihrer Beschichtung und

Fig. 3 einen ebenfalls schematischen Schnitt durch eine Vorrichtung zur Reinigung von insbesondere ölverschmutztem
Meerwasser.

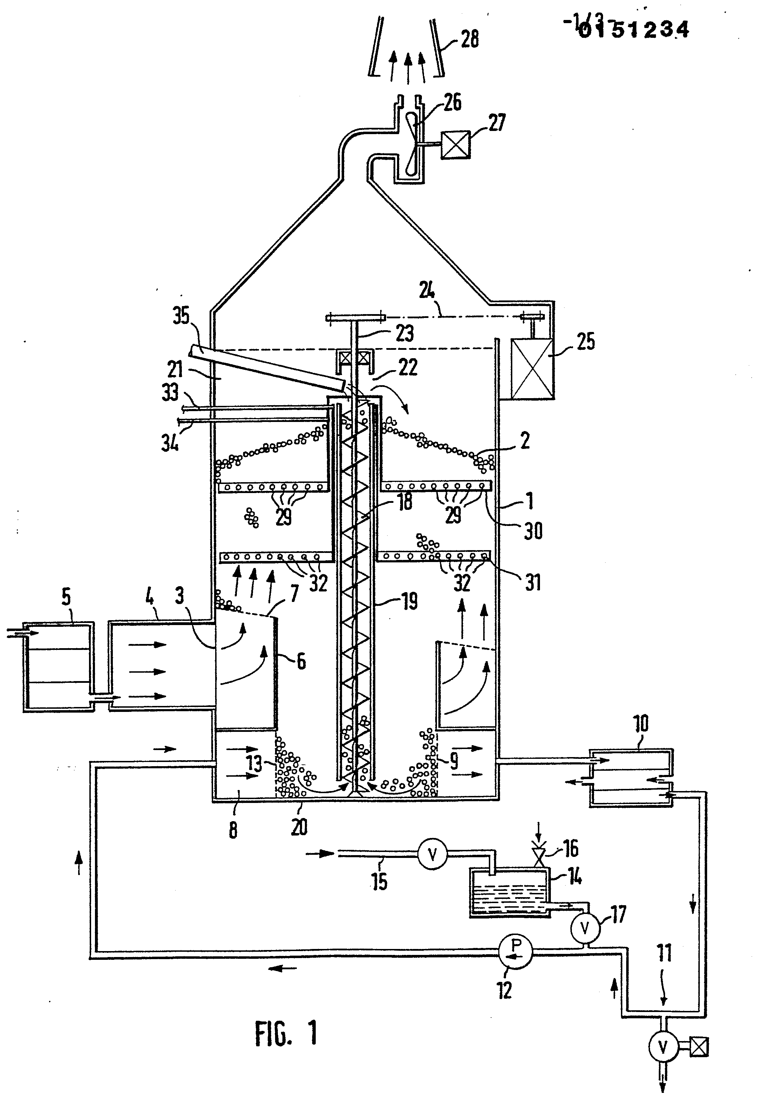

Die in Fig. 1 dargestellte Abgasfiltervorrichtung, die in ihren
wesentlichen, im Stand der Technik im übrigen bereits vorhandenenen, Grundzügen mit einer in einer älteren Anmeldung beschriebenen Vorrichtung (deutsche Patentanmeldung P 33 40 655.3)
übereinstimmt, sind alle mit den gleichen Bezugszeichen wie
dort beschriebenen Bestandteile nachfolgend nicht mehr im
einzelnen beschrieben.

Neu an der erfindungsgemäßen Abgasfiltervorrichtung ist das
Vorsehen zweier übereinanderliegender Rührarmsysteme 30, 31,
wobei im dargestellten Ausführungsbeispiel diese in besonders einfacher Weise an der Welle 23 der Förderschnecke 18
aufgehängt sind und mit dieser umlaufen. Den hohlen, mit
Flüssigkeitsaustrittsöffnungen 29 bzw. 32 versehenen Rührarmen werden über Zuführleitungen 33 bzw. 34 bestimmte Reaktionssubstanzen zugeführt, beispielsweise über die Leitung 33 zu den Rührarmen 31 Chrom-, Molubdän-, oder Kupferlösungen bzw. Gemische dieser Substanz zur katalytischen
Beseitung von Stickoxiden. Entsprechend können dann über
die Leitung 34 den Rührarmen 30 ammoniakhaltiges Wasser zugeführt werden. Die Rührarmsysteme 30, 31 liegen beide unterhalb der Oberfläche der Filterkugelpackung, so daß die
Reaktionssubstanzen nicht an der heißen Oberfläche der Kugelpackung wirkungslos verdampfen. Darüber hinaus ergibt sich auf diese Art und Weise ein Rühreffekt, der für eine gleichmäßige Durchmischung und damit für eine gleichmäßige Reinigung der von unten durchströmenden Abgabe über den gesamten Querschnitt des Filterbehälters 1 sorgt.

Bei 35 ist eine Zugabevorrichtung für verbrennungsaktive Katalysatorkugeln und/oder für stückigen Kalkstein oder Dolomit vorgesehen. Das dabei angedeutete Zuführrohr führt in die Nähe des oberen Endes des von der Förderschnecke 18 durchsetzten Rohres 19, so daß die Katalysatorkugeln oder die Kalkstein- bzw. Dolomitstücke in das obere Ende des Rohres einfallen. Durch die Schnecke werden sie dann zusammen mit den gereinigten Filterkugeln gleichmäßig nach außen ausgeworfen und schließlich mit Hilfe des oberen Rührarmsystems 30 gleichmäßig in die langsam von oben nach unten nachrutschende Filterkugelpackung eingerührt.

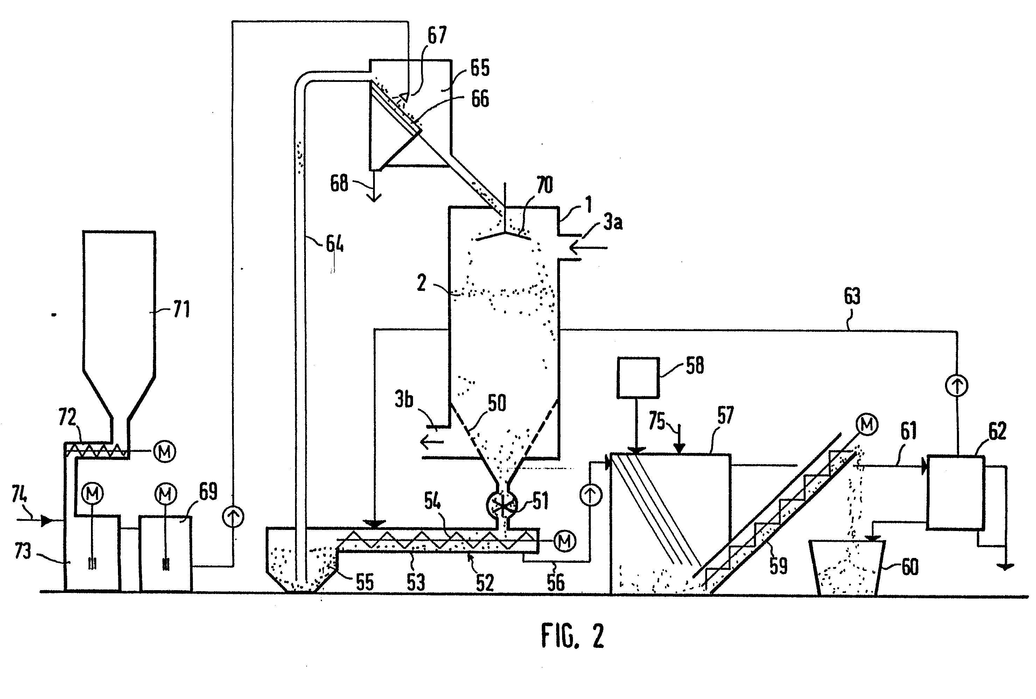

Kernstück der erfindungsgemäßen bevorzugten Ausführungsform einer Abgasreinigungsvorrichtung nach Fig. 2 ist ein Filter mit einem als stehender Kreiszylinder ausgebildeten Filterbehälter 1, in welchem aus einem vorzugsweise porösen technischen Keramik bestehende Filterkugeln 2 eingefüllt sind. Bei 3 a ist eine Einlaßöffnung für das zu reinigende Abgas, im dargestellten Ausführungsbeispiel einen zu entschwefelnde Rauchgas, zu erkennen, die oberhalb der Packung der Filterkugeln 2 einmündet, während bei 3b am unteren Ende des Filterbehälters 1 die Auslaßleitung für das gereinigte Rauchgas angeordnet ist. Ein gasdurchlässiger einen Innenboden bildender Trichter 50 sammelt die von oben nach unten nachrutschenden Filterkugeln 2 und führt sie einer Austragsvorrichtung 51 zu, an die sich eine Filterkugel-Waschvorrichtung 52 anschließt. Die Filterkugeln 2, die von oben ständig neu auf die Filterkugelpackung im Filterbehälter1 nachgefüllt werden, wobei sie vorher im Zuge einer - weiter unten näher zu beschreibenden - Dosiervorrichtung mit einer Reaktionssubstanz versehen werden, nehmen die jeweils abzutrennenden schädlichen Bestandteile des über die Eingangsleitung 3a eintretenden Rauchgases auf, während dieses Rauchgas im Gleichstrom mit der Filterkugelabsetzbewegung von oben nach unten durch den Filterbehälter 1 strömt. Dabei verbinden sich die Verunreinigungsstoffe mit der Reaktionssubstanz und bleiben somit fest auf den Filterkugeln haften. Darüber hinaus ergibt sich durch die in jeden Fall noch etwas feuchte Reaktionssubstanz auch eine gute zusätzliche Filterwirkung für noch vorhandene staubförmige Verunreinigungen. Die Waschvorrichtung 52 umfaßt im dargestellten Ausführungsbeispiel ein im wesentlichen horizontal angeordnetes Rohr 53 mit einer Filterkugel-Förderschnecke 54, welche die Filterkugeln im Gegenstrom zu einer Waschflüssigkeit in einen Zwischenbehälter 55 für die gewaschenen Filterkugeln fördert. Die Waschflüssigkeit wird im Bereich des Austragsendes zum Zwischenspeicher 55 zugeführt, wobei es sich im Falle der Rauchgasentschwefelung um eine Waschlauge handelt. Durch ggf. leichtes Ansteigen des Rohres 53 in Förderrichtung der Schnecke 54 erreicht man, daß die Waschflüssigkeit im Gegenstrom zu den Filterkugeln durch das Rohr strömt, um über eine Leitung 56 einem Lamellenklärer 57 zugeführt zu werden.In diesen wird aus einem Behälter 58 ein Flockungsmittel eingeführt, um eine Trennung der Verunreinigungsstoffe von der Waschflüssigkeit zu erreichen.

Bei der vorliegenden, speziell angesprochenen Entschwefelung von Rauchgas, fallen - abgesehen von zusätzlichen
staubförmigen Verunreinigungen - in erster Linie Gips an,
der sich unten im Lamellenklärer 57 ansammelt und über eine Schneckenvorrichtung 59 in einen Transportsilo 60 ausgetragen wird. Die gereinigte Waschflüssigkeit gelangt über
eine Leitung 61 in einen Reinwasserbehälter mit Laugenbevorratung 62, von wo aus die Waschflüssigkeit schließlich
wiederum über eine Leitung 63 an den Eingang der Waschvorrichtung zurückgeführt wird.

Die gereinigten Filterkugeln werden über einen Steigförderer
64 einer Beaufschlagungsvorrichtung 65 zugeführt, die eine
zumindest teilweise als Gitter ausgebildete Schräglaufbahn
66 aufweist, über welche die Filterkugeln herunterrollen.
Beim Herunterrollen werden sie über eine Sprühvorrichtung 67
mit Reaktionssubstanz, im vorliegenden Fall einer Kalklösung
besprüht. Überschüssige Kalklösung kann über das Gitter sofort wieder ablaufen, um über eine nur schematisch angedeutete Leitung 68 einer Dosiervorrichtung 69 für die Kalklösung (allgemeiner der Reaktionssubstanz) wieder zugeführt zu
werden. Die Schräglaufbahn 66 ist soweit verlängert, daß die
Kalklösung zumindest teilweise als dünne Schicht antrocknen
kann, ehe die beschichteten Filterkugeln oben in den Filterbehälter 1 eingeführt werden, wo sie über eine Verteilvorrichtung, beispielsweise ein Prallblech 70 verteilt werden,
so daß sie möglichst gleichmäßig auf die Oberfläche der Filterkugelpackung im Filterbehälter 1 aufgeschichtet werden.
Mit 71 ist ein Kalk- oder Kalksteinsilo bezeichnet, aus welchem über eine Fördereinrichtung 72 Kalk- bzw. Kalkstein einer
Mischvorrichtung 73 zur Erzeugung einer wässrigen Lösung zugeführt
wird. Diese wässrige Lösung wird schließlich über die Dosiervorrichtung 69 dann der Auftragsvorrichtung zugeführt. Bei
74 und 75 sind Zuführleitungen für frisches Zusatzwasser angedeutet.

- 15 -

0151234

Die Erfindung ist nicht auf das in Fig. 2 dargestellte Ausführungsbeispiel beschränkt. Neben anderer Ausbildung der
Transport- und Waschvorrichtung sowie auf einer möglichen
anderen Ausbildung der Wiederaufbereitungsanlage für die
Waschflüssigkeit kann selbstverständlich auch die Auftragseinrichtung zur Beschichtung der Filterkugeln in anderer
Weise ausgebildet sein. Wesentlich ist dabei aber, daß die Beschichtung der Filterkugeln in einer Weise erfolgt, daß zum
einen eine gewisse Mindestdicke der Auftragsschicht und
zwar gleichmäßig über die gesamte Kugeloberfläche erreicht
wird und andererseits auch vermieden wird, daß die Schicht zu
dick wird, so daß nicht durch das Rauchgas diese überschüssigen Reaktionssubstanzen unter Verunreinigung des
Reingases mitgerissen werden können. Darüber hinaus eignet
sich die erfindungsgemäße Vorrichtung selbstverständlich nicht
nur für die Entschwefelung von Rauchgas unter Zuführung
einer Kalklösung, sondern man könnte auch andere Reaktionssubstanzen aufbringen, um entsprechende andere Verunreingiungsstoffe bevorzugt aus einem Gasstrom herauszufiltern.

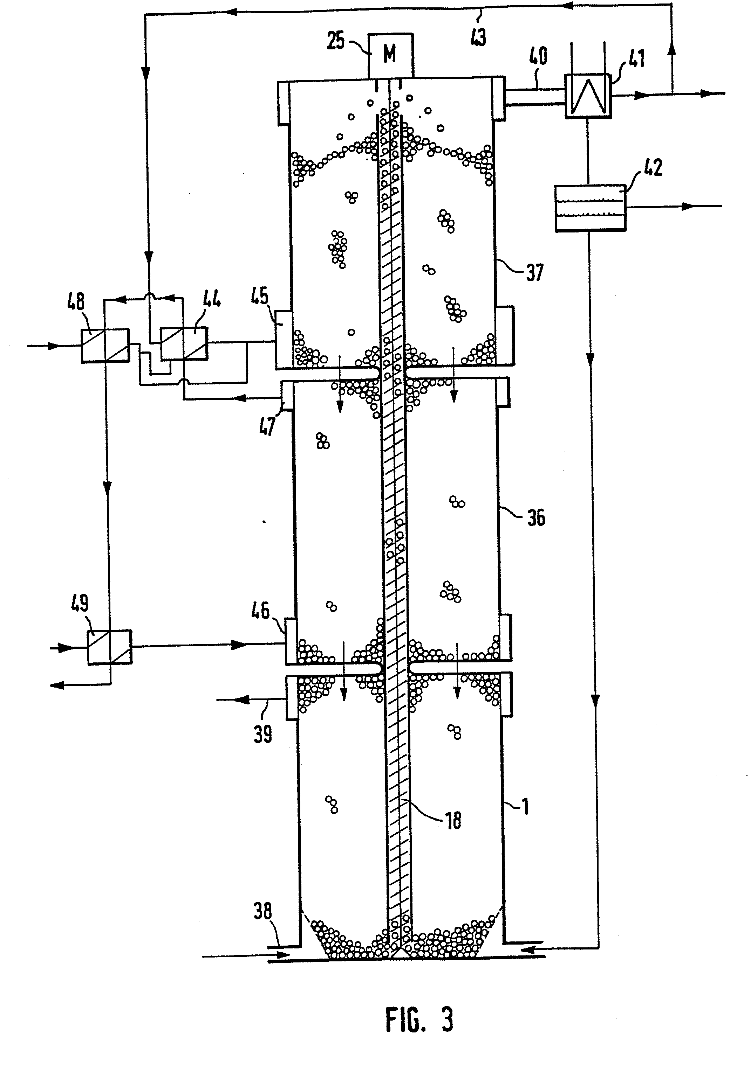

Bei der Meerwasserreinigungsanlage gemäß Fig. 3 ist über
dem Filterbehälter 1 ein Verbrennungsbehälter 36 und über
diesem ein Pyrolysebehälter 37 angeordnet. Die am unteren
Ende des Filterbehälters von der Transportschnecke 18 nach
oben geförderten Filterkugeln, die aus dem Meerwasser insbesondere Ölverunreinigungen durch Adsorption herausgenommen haben, so daß das bei 38 eintretende verunreinigte
Meerwasser am oberen Ende bei 39 als sauberes Meerwasser
wieder entnommen werden kann, werden mit Hilfe der Transportvorrichtung durch den Verbrennungsbehälter 36 hindurch
in das obere Ende des Pyrolysebehälters 37 gefördert. In
diesem Pyrolysebehälter erfolgt eine pyrolytische Zer-

setzung der Ölbestandteile, wodurch Benzin und Leichtöl, sowie Pyrolysegas gebildet werden, die bei 40 austreten und zunächst einen Wärmetauscher 41 durchsetzen. Dabei ergibt sich eine Trennung von Pyrolysegas und ebenfalls bei der Pyrolyse anfallenden Benzin oder leichten Ölen. Diese werden in der Trennvorrichtung 42 vom Wasserbestandteil getrennt. Ein Teil des Pyrolysegases wird über eine Leitung 43 und ein Brennwertgerät 44 dem Pyrolysebehälter am unteren Ende bei 45 wieder zugeführt, um die Pyrolyse aufrecht zu erhalten. Bei der pyrolytischen Zersetzung entsteht eine Koksschicht auf den Filterkugeln, die mit dieser Koksschicht versehen über Dosierklappen od.dgl. von oben in den Verbrennungsbehälter einfallen. Dort erfolgt eine Verbrennung dieser Koksbestandteile, indem am unteren Ende bei 46 Luft zugeführt wird, während die Verbrennungsluft oben bei 47 entnommen und - nachdem sie Wärmeaustauscher des Brennwertgeräts 44 sowie einen Wärmetauscher 48 in der Luftzuführung 48 des Pyrolysebehälters und 49 des Verbrennungsbehälters durchsetzt hat, schließlich als Abgas dem Schornstein zugeführt wird. Auf diese Art und Weise wird auch die notwendige Verbrennungsluft stets vorgewärmt sowohl dem Verbrennungsbehälter, als auch dem Pyrolysebehälter zugeführt, was die Vollständigkeit der Pyrolyse und der Verbrennung in allen Bereichen der jeweiligen Stufen begünstigt. Die schließlich durch Abbrennen der Koksschicht völlig gereinigten Filterkugeln fallen über entsprechende Dosiereinrichtungen zwischen den Verbrennungsbehälter 36 und dem Filterbehälter 1 oben in den Filterbehälter 1 wieder ein, um dort erneut zur adsorbierenden Herausnahme von Ölverunreinigungen aus dem Meerwasser zur Verfügung zu stehen.

Patentansprüche

1. Filtervorrichtung zur Abgasfilterung, insbesondere um Rauchgas von Arsen, Blei, Fluor, Gichtgas oder Schwefeloxiden zu befreien, mit einem mit (vorzugsweise porösen) Filterkugeln gefüllten Filterbehälter mit einer Einlaßöffnung für das zu reinigende fluide Medium am einen Behälterende und einer Auslaßöffnung am anderen Behälterende einer Transporteinrichtung zur Entnahme von Filterkugeln am einen Behälterende und zur Wiederzuführung am anderen Behälterende, sowie einer im Zuge der Transporteinrichtung angeordneten Waschvorrichtung zur Reinigung der Filterkugeln, dadurch gekennzeichnet, daß im Bereich des Wiederzuführendes des Behälters eine Dosiervorrichtung zur Zugabe von einen Überzug auf den Filterkugeln bildenden Reaktionssubstanzen für schädliche Abgaskomponenten gelagert ist.

2. Filtervorrichtung nach Anspruch 1, dadurch gekennzeichnet, daß am Behälterende, an dem die gereinigten Filterkugeln wieder zugeführt werden, eine Zugabevorrichtung (35) für verbrennungsaktive Katalysatorkugeln und/oder für stückigen Kalkstein oder Dolomit in das Kugelbett vorgesehen ist.

3. Filtervorrichtung nach Anspruch 1 oder 2, dadurch gekennzeichnet, daß die Filterkugeln (2) zumindest teilweise Blähtonkugeln sind.

4. Filtervorrichtung nach einem der Ansprüche 1 bis 3, dadurch gekennzeichnet, daß die Filterkugeln (2) Keramikkugeln sind.

5. Filtervorrichtung nach einem der Ansprüche 1 bis 4, gekennzeichnet durch eine Zugabevorrichtung für hygroskopische Substanzen zur Bindung von Feinstaub an klebrigen Oberflächenschichten auf den Filterkugeln.

6. Filtervorrichtung nach einem der Ansprüche 1 bis 5, dadurch gekennzeichnet, daß die Dosiervorrichtung einen über- oder unterhalb der Oberfläche des Filterkugelbettes als rotieren( gelagerter Rührarm (30) angeordneten Dosierarm enthält.

7. Filtervorrichtung nach Anspruch 6, gekennzeichnet durch eine dem Rührarm (30) nachbeschaltete zweite, ggf. als zweiter Rührarm (31) ausgebildete Zugabeeinrichtung.

8. Filtervorrichtung nach einem der Ansprüche 1 bis 5, dadurch gekennzeichnet, daß die Dosiervorrichtung (65) außerhalb des Filterbehälters (1) angeordnet und so ausgebildet ist, daß die Filterkugeln beim Eintreten in den Filterbehälter (1) mit einer definierten Überzugsschicht versehen sind, derart, daß das strömende Rauchgas keine überschüssige Reaktionssubstanz mitreißen kann.

9. Filtervorrichtung nach Anspruch 8, dadurch gekennzeichnet, daß die Dosiervorrichtung (65) eine über einer zumindest teilweise als Gitter ausgebildeten Schräglaufbahn (66) für die Filterkugeln angeordnete Sprühvorrichtung (67) für die Reaktionssubstanzen aufweist.

10. Filtervorrichtung nach Anspruch 8 oder 9, dadurch gekennzeichnet, daß die Dosiervorrichtung (65) oberhalb des Filterbehälters (1) angeordnet ist, so daß die gereinigten und neu beschichteten Filterkugeln von oben in den, vorzugs weise von oben nach unten vom Rauchgas durchströmten Filterbehälter (1) einrutschen können, und daß am unteren Ende des Filterbehälters (1) ein, einen Innenboden bildender gasdurchlässiger Sammeltrichter (50) über einer Austragsvorrichtung (51) für die Filterkugeln vorgesehen ist.

11. Filtervorrichtung nach einem der Ansprüche 8 bis 10, dadurch gekennzeichnet, daß der Austragsvorrichtung (51) eine, Filterkugeln-Förderschnecke enthaltende Waschvorrichtung (52) nachgeschaltet ist, die entgegen der Förderrichtung von der Waschflüssigkeit durchsetzt wird und daß eine Wiederaufbereitungsanlage für die Waschflüssigkeit vorgesehen ist.

12. Filtervorrichtung nach einem der Ansprüche 8 bis 11, gekennzeichnet durch einen der Waschvorrichtung (52) für die Filterkugeln nachgeordneten Zwischenspeicher (55) für die gereinigten Filterkugeln.

13. Filtervorrichtung nach einem der Ansprüche 8 bis 12 zur Entschwefelung von Rauchgas mittels Kalk oder Kalkstein, gekennzeichnet durch eine mit einem Kalk- oder Kalksteinsilo (71) verbundene Mischvorrichtung (73) zur Erzeugung einer wässrigen, über eine Dosiervorrichtung (69) der Sprühvorrichtung (67) zuzuführenden Lösung, einer als Trockenstrecke wirkenden Verlängerung der Schräglaufbahn (66), sowie einen im Zuge der Wiederaufbereitungsanlage angeordneten Lamellenklärer (57) zur Trennung der Waschflüssigkeit von den, insbesondere aus Gips bestehenden festen Verunreinigungen.

14. Filtervorrichtung zur Reinigung von Flüssigkeiten, insbesondere ölverschmutztem Wasser, mit einem mit porösen Filterkugeln gefüllten Filterbehälter mit einer Einlaßöffnung für das zu reinigende fluide Medium am einen Behälterende und einer Auslaßöffnung am anderen Behälterende einer Transporteinrichtung zur Entnahme von Filterkugeln am einen Behälterende und zur Wiederzuführung am anderen Behälterende, sowie einer im Zuge der Transporteinrichtung angeordneten Waschvorrichtung zur Reinigung
der Filterkugeln, dadurch gekennzeichnet, daß die adsorptionsaktiven Filterkugeln in über dem Filterbehälter (1)
angeordnete Reinigungsbehälter (36, 37) transportiert
werden, aus denen sie über Dosiereinrichtungen in den
Filterbehälter (1) zurückfallen.

15. Filtervorrichtung nach Anspruch 14, dadurch gekennzeichnet
daß in den Reinigungsbehältern (36. 37) eine Pyrolyse
oder Verbrennung der adsorbierten Schadstoffe erfolgt.

FIG. 1

FIG. 2

FIG. 3